# EUROPEAN PATENT SPECIFICATION

(11) **EP 2 694 842 B1**
(45) Date of publication and mention of the grant of the patent: **12.06.2019**
(21) Application number: 12715740.2
(22) Date of filing: 02.04.2012
(51) Int. Cl.: F16H 3/00

(54) **TRANSMISSION UNIT**
ÜBERTRAGUNGSEINHEIT
UNITÉ DE TRANSMISSION

(30) Priority: 01.04.2011 NL 2006527; 30.03.2012 NL 2008578
(43) Date of publication of application: 12.02.2014
(73) Proprietor: DTI Group B.V., 5653 LD Eindhoven (NL)
(72) Inventor: VAN DRUTEN, Roëll Marie, NL-5658 EG Eindhoven (NL); SERRARENS, Alexander Franciscus Anita, 5653 LD Eindhoven (NL); VROEMEN, Bas Gerard, 5653 LD Eindhoven (NL)
(74) Representative: V.O.
(86) International application number: PCT/NL2012/050219
(87) International publication number: WO 2012/144891

(56) References cited:
- WO-A2-01/88409
- DE-A1- 19 924 501
- DE-C1- 19 912 315
- JP-A- 60 057 033

## Description

### Field of the invention

The invention relates to a transmission unit having a main input which can be connected to a drive source, and a main output which can be connected to the driven wheels, and comprises:
- a transmission having a first and a second transmission input and a transmission output, as well as
- a main clutch comprising a first clutch section which is connected to the main input and to the second transmission input, and a second clutch section which is connected to the first transmission input,
which transmission:
- comprises a first gearing line which comprises a first gear set and a first transmission clutch connected in series to the first gear set, and which has a first input which is connected to the first transmission input, and a first output which is connected to the transmission output, as well as
- a second gearing line which runs parallel to the first gearing line and comprises a second gear set and a second transmission clutch connected in series to the second gear set, and which has a second input which is connected to the first transmission input, and a second output which is connected to the transmission output.

### State of the art

A transmission unit of this type is known from EP-A- 1 869 342. With this known transmission unit it is possible to retain torque transfer between the drive source and the driven wheels in at least a number of cases where a change is made from one transmission ratio to another transmission ratio.

Publication WO 01/88409 discloses a gearbox comprising a drive shaft that can be connected to a drive motor, at least two gearbox input shafts, which are used to form at least a first and a second parallel gear shift train, a gearbox output shaft and at least one clutch.

### Summary of the invention

It is an object of the invention to provide a transmission unit of the type defined in the opening paragraph in which it is possible to shift from any gear to any higher and/or lower gear while retaining torque transfer from the drive source to the driven wheels, and where the number of switching elements and the number of gear sets is limited. For this purpose, the transmission unit according to the invention is characterized in that the transmission comprises a third gearing line which comprises a third gear set and a third transmission clutch connected in series to the third gear set, and which has a third input which is connected to the second transmission input, and a third output which is connected to the transmission output, where the second transmission input can be connected via a short-circuit clutch to the second gearing line in between the second transmission clutch and the second gear set.

The first and second transmission clutches arc preferably constituted by a first switch clutch that can be switched between three positions, being a first position in which the first transmission input is connected to the first gear set, a second position in which the first transmission input is connected to the second gear set, and a third position in which the first transmission input is connected to neither gear set.

Furthermore, preferably the third transmission clutch and the short-circuit clutch are constituted by a second switch clutch that can be switched between three positions, being a first position in which the second transmission input is connected to the third gear set, a second position in which the second transmission input is connected to the second gear set, and a third position in which the second transmission input is connected to neither gear set.

According to the invention the transmission comprises a fourth gearing line which comprises a fourth gear set and a fourth transmission clutch connected in series to the fourth gear set, and which has a fourth input which is connected to the first transmission input, and a fourth output which is connected to the transmission output.

The fourth input between the first gear set and the first transmission clutch is preferably connected to the first gearing line. This offers advantages as regards construction.

Further advantages with regard to construction are achieved by means of an embodiment of the transmission unit in which the first, second and third output are connected to one another, and the transmission comprises an auxiliary clutch which can connect these outputs to the transmission output.

Preferably, the fourth transmission clutch and the auxiliary clutch are constituted by a third switch clutch which can be switched between three positions, being a first position in which the fourth output is connected to the transmission output, a second position in which the first, second and third outputs are connected to the transmission output, and a third position in which the transmission output is connected to none of the outputs.

A further embodiment by which further advantages with regard to construction can be achieved is characterized in that the first and second output are connected to each other and in that the transmission comprises an auxiliary clutch which can connect these outputs to the transmission output. In that case the third output is preferably connected directly to the transmission output.

Preferably, the fourth transmission clutch and the auxiliary clutch are then constituted by a third switch clutch which can be switched between three positions, being a first position in which the fourth output is connected to the transmission output, a second position in which the first and second outputs are connected to the transmission output and a third position in which the transmission output is connected to none of the outputs.

A still further embodiment of the transmission unit according to the invention by which more different gear sets can be realized is characterized in that the transmission comprises a fifth gearing line which comprises a fifth gear set and a fifth transmission clutch connected in series to the fifth gear set, and which has a fifth input which is connected to the second transmission input, and a fifth output which is connected directly to the transmission output.

In lieu of the embodiment described above, the fifth input can be connected to the first transmission input and the fifth output can be connected directly to the transmission output, or the fifth input can be connected to the first gearing line in between the first gear set and the first transmission clutch, and the fifth output can be connected directly to the transmission output. The fourth input is then preferably connected directly to the first transmission input.

A further embodiment that offers advantages as regards construction is characterized in that the first, second and fourth output are connected to one another and in that the transmission comprises an auxiliary clutch which can connect these outputs to the transmission output.

With this embodiment more different gear sets can be realized in an advantageous manner by providing the transmission with a fifth gearing line, where the fifth input is connected to the fourth gearing line in between the fourth gear set and the fourth transmission clutch, and the fifth output is connected directly to the transmission output.

The transmission preferably comprises at least five gears, of which a first gear constitutes the most retarding gear set and the fifth gear constitutes the least retarding gear set. Advantageous configurations with advantages as to construction are characterized in that the first gear set preferably constitutes the fourth or fifth gear, and/or the second gear set constitutes the second or third gear, and/or the third gear set constitutes the second or fourth gear, and/or the fourth gear set constitutes the second, third or fifth gear, and/or the fifth gear set constitutes the second or fourth gear.

Further constructively advantageous embodiments are characterized in that:
- the first transmission input is constituted by a shaft and the second transmission input is constituted by a hollow shaft which is arranged concentrically around the shaft;
- the main clutch is constituted by a dry plate or a wet plate clutch;
- one or more of the transmission clutches, the auxiliary clutch and the short-circuit clutch is/are constituted by claw clutches and/or synchronizers;
- the main clutch is constituted by a claw clutch and/or synchronizer;
- one or more of the transmission clutches, the auxiliary clutch and the short-circuit clutch is/are constituted by freewheel bearings/freewheel bearing clutches;
- the second transmission clutch is constituted by a freewheel bearing/freewheel bearing clutch;
- the transmission unit comprises an electromotor/generator which is coupled to one of the rotating elements of the transmission unit; and
- the transmission unit comprises a flywheel which is coupled to one of the rotational elements of the transmission unit.

Not claimed is a method of creating a first gear in a transmission unit. With respect to this method, the short-circuit clutch, the auxiliary clutch and the first and third transmission clutches are opened and the main clutch and the second and fourth transmission clutches are closed. By creating the first gear in the transmission by running through various higher gears, the number of switching elements in the transmission and the number of (gear) transmissions can be reduced. As a result, a physical first gear need not be present in the transmission and the lowest physical gear set in the transmission is the second gear. This offers many constructive advantages.

A further version of this method which is suitable for application to a transmission unit according to the invention having five gearing lines is characterized in that the short-circuit clutch, the auxiliary clutch and the first, third and fourth transmission clutches are opened and the main clutch and the second and fifth transmission clutches are closed.

Also not claimed is a method of shifting gears while torque transfer to the main output is maintained in a transmission unit as claimed in any one of the previous claims. With respect to this method, after the main clutch has been synchronized completely or substantially completely, when a gear set has been employed, the second transmission input is connected to the gear set already employed and the main clutch is opened, after which the first transmission input is connected to a higher (less retarding) gear, and after that the main clutch is actuated leading to the second transmission input becoming torquclcss and then being disengaged, after which the main clutch is further synchronized with the higher gear.

### Brief description of the drawings

The invention will be described below in more detail based on examples of embodiment of the transmission unit according to the invention represented in the drawing figures, in which:
Fig. 1 gives a diagrammatic representation of a first embodiment of the transmission unit according to the invention comprising four gearing lines;
Fig. 2 gives a constructive representation of the embodiment represented in Fig. 1;
Fig. 3 gives a diagrammatic representation of a a second embodiment of the transmission unit according to the invention comprising five gearing lines, in which the fifth gearing line is connected to the second transmission input;
Fig. 4 gives a diagrammatic representation of a third embodiment of the transmission unit according to the invention comprising five gearing lines, in which the fifth gearing line is connected directly to the first transmission input;
Fig. 5 gives a diagrammatic representation of a third embodiment of the transmission unit according to the invention comprising five gearing lines, in which the fifth gearing line is connected to the first transmission input via the first gearing line; and
Fig. 6 gives a diagrammatic representation of a third embodiment of the transmission unit according to the invention comprising five gearing lines, in which the fifth gearing line is connected to the first transmission input via the fourth gearing line.

### Detailed description of the drawings

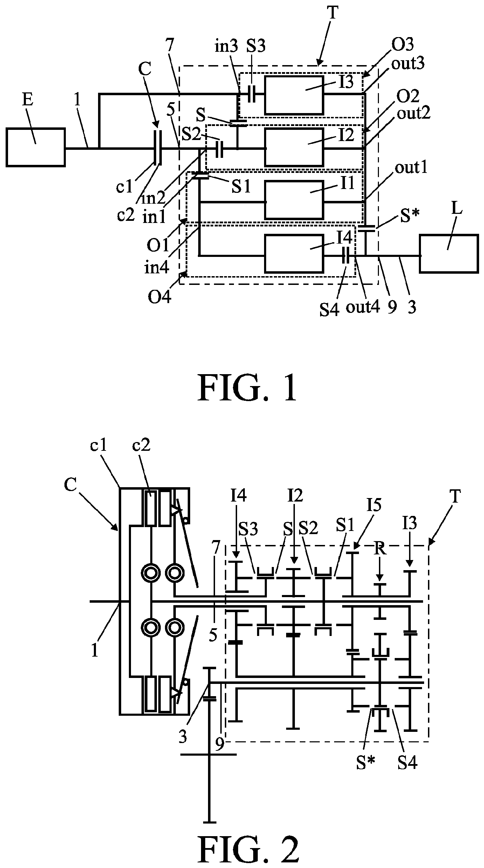

Figs. 1 and 2 give a diagrammatic and constructive representation respectively of a first embodiment of the transmission unit according to the invention. The transmission unit comprises a main input 1 which is connected to a drive source E, as well as a main output 3 which is connected to driven wheels L of a vehicle. The transmission unit further comprises a transmission T having a first and a second transmission input 5 and 7 and a transmission output 9, as well as a main clutch C having a first clutch section c1 which is connected to the main input 1 and to the second transmission input 7, and a second clutch section c2 which is connected to the first transmission input 5.

The transmission unit comprises four gearing lines 01 - 04 which comprise each a gear set I1 - I4 and a transmission clutch S1 - S4 connected in series thereto and which have each an input in1 - in4 and an output out1 - out4, see Fig. 1. The first and second gearing lines O1 and O2 run parallel to each other and are connected with the first and second input in1 and in2 to the transmission input 5 and with the first and second output out1 and out2 to the transmission output 9. The third gearing line 03 is connected with the third input in3 to the second transmission input 7 and with the third output out3 to the transmission output 9. The first, second and third output out1 - out3 are connected to one another and via an auxiliary clutch S* present in the transmission unit to the transmission output 9. The fourth gearing line 04 is connected with the fourth input in4 to the first gearing line 01 in between the first gear set I1 and the first transmission clutch S1, and with the fourth output out4 to the transmission output 9. The first, second and third transmission clutches S1 - S3 are then located between the respective inputs in1 - in3 and the respective gear sets I1 - I3 and the fourth transmission clutch S4 is located between the fourth gear set 14 and the fourth output out4. The second transmission input 7 can be connected via a short-circuit clutch S to the second gearing line 02 in between the transmission clutch S2 and the second gear set 12.

The first and second transmission clutches S1 and S2 are constituted by a first switch clutch, see Fig. 2, which can be switched between three positions, being a first position in which the first transmission input is connected to the first gear set, a second position in which the first transmission input is connected to the second gear set and a third position in which the first transmission input is connected to neither gear set. The third transmission clutch S3 and the short-circuit clutch S are constituted by a second switch clutch which can be switched between three positions, being a first position in which the second transmission input is connected to the third gear set, a second position in which the second transmission input is connected to the second gear set and a third position in which the second transmission input is connected to neither gear set. The fourth transmission clutch S4 and the auxiliary clutch S* are constituted by a third switch clutch which can be switched between three positions, being a first position in which the fourth output is connected to the transmission output, a second position in which the first, second and third outputs are connected to the transmission output and a third position in which the transmission output is connected to none of the outputs.

The first gearing line constitutes the fifth gear in this case, the second gearing line constitutes the second gear, the third gearing line constitutes the fourth gear and the fourth gearing line constitutes the third gear. In this transmission unit the first gear is realized by keeping the short-circuit clutch S, the auxiliary clutch S* and the first and third transmission clutches S1 and S3 open and keeping the main clutch C and the second and fourth transmission clutches S2 and S4 closed. Shifting from the first to the second gear while retaining torque transfer is realized by having the torque transfer effected via the third gear during the shifting operation. Shifting from the second to the third gear while retaining torque transfer is realized by having the torque transfer effected via the third gear during the shifting operation. Shifting from the fourth to the fifth gear while retaining torque transfer is realized by having the torque transfer effected via the fifth gear during the changing operation. Shifting while retaining torque transfer is then realized by means of four gear sets (gear pairs) and six clutches.

Shifting gear in this transmission unit while retaining torque transfer to the main output is realized in that, after the main clutch has been completely synchronized or substantially completely synchronized, and when a gear set has been switched on, the second transmission input is connected to the gear set already switched on and the main clutch is opened, after which the first transmission input is connected to a higher (less retarding) gear, and subsequently the main clutch is actuated so that the second transmission input becomes torqueless and is disengaged afterwards, after which the main clutch is further synchronized with the higher gear.

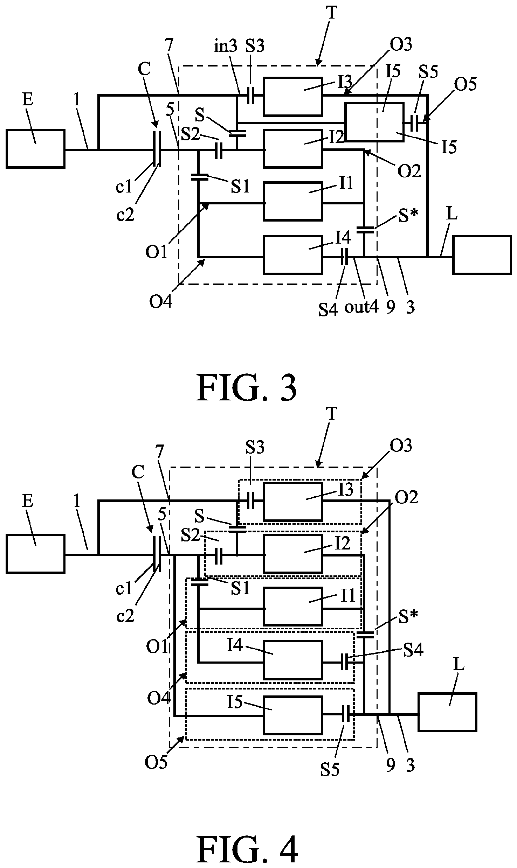

Fig. 3 gives a diagrammatic representation of a a second embodiment of the transmission unit according to the invention comprising five gearing lines. The fifth gearing line O5 comprises a fifth gear set I5 and a fifth transmission clutch S5. The first and the second output are connected together and the transmission T includes an auxiliary clutch S* which can connect these outputs to the transmission output 9. The third output is connected directly to the transmission output 9. The fourth transmission clutch S4 as well as the auxiliary clutch S* are constituted by a third switch clutch which can be switched between three positions, being a first position in which the fourth output is connected to the transmission output, a second position in which the first and second outputs are connected to the transmission output and a third position in which the transmission output is connected to none of the outputs. The fifth input is connected to the second transmission input 7 and the fifth output is connected directly to the transmission output 9.

The first gearing line here constitutes the fifth gear, the second gearing line constitutes the third gear, the third gearing line constitutes the second gear, the fourth gearing line also constitutes a second gear and the fifth gearing line constitutes the fourth gear. The first gear in this transmission unit is obtained by keeping the short-circuit clutch S, the auxiliary clutch S* and the first and third transmission clutches S1 and S3 open and keeping the main clutch C and the second and fourth transmission clutches S2 and S4 closed. Shifting from the first to the second gear while retaining torque transfer is effected by having the torque transfer effected via the second gear during the shifting operation. Shifting from the second to the third gear while retaining torque transfer is effected by having the torque transfer effected via the third gear during the shifting operation. Shifting from the third to the fourth gear while retaining torque transfer is effected by having the torque transfer effected via the fifth gear during the shifting operation. Shifting from the third to the fifth gear and from the fourth to the fifth gear while retaining torque transfer is effected by having the torque transfer effected via the fifth gear during the shifting operation. Shifting gears while retaining torque transfer is then effected by means of five gear sets (gear pairs) and seven clutches.

Fig. 4 gives a diagrammatic representation of a third embodiment of the transmission unit according to the invention comprising five gearing lines, in which the fifth gearing line is connected directly to the first transmission input. The fifth gearing line again includes a fifth gear set and a fifth transmission clutch connected in series to the fifth gear set, and has a fifth input which is connected to the first transmission input 5, and a fifth output which is connected directly to the transmission output 9.

The first gearing line then constitutes the fifth gear, the second gearing line constitutes the third gear, the third gearing line constitutes the second gear, the fourth gearing line also constitutes a second gear and the fifth gearing line constitutes the fourth gear. The first gear in this transmission unit is obtained by keeping the short-circuit clutch S, the auxiliary clutch S* and the first and third transmission clutches S1 and S3 open and keeping the main clutch C as well as the second and fourth transmission clutches S2 and S4 closed. Shifting from the first to the second gear while retaining torque transfer is realized by having the torque transfer effected via the second gear during the shifting operation. Shifting from the second to the third gear while retaining torque transfer is realized by having the torque transfer effected via the third gear during the shifting operation. Shifting from the third to the fourth gear while retaining torque transfer is realized by having the torque transfer effected via the fourth gear during the shifting operation. Shifting from the third to the fifth gear while retaining torque transfer is realized by having the torque transfer effected via the fifth gear during the shifting operation. Shifting gears while retaining torque transfer is effected by means of five gear sets (gear pairs) and seven clutches.

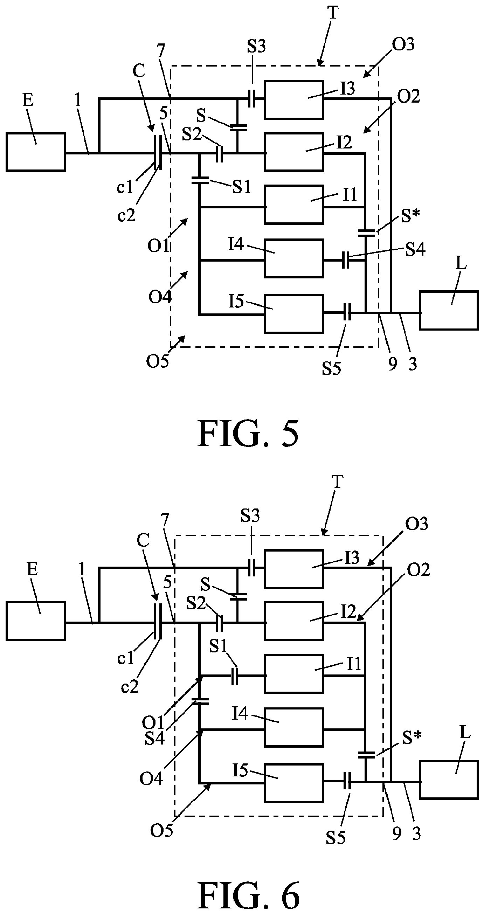

Fig. 5 gives a diagrammatic representation of a third embodiment of the transmission unit according to the invention comprising five gearing lines, in which the fifth gearing line is connected to the first transmission input via the first gearing line. The fifth gearing line again includes a fifth gear set and a fifth transmission clutch connected in series to the fifth gear set, and has a fifth input which is connected to the first gearing line 01 in between the first gear set I1 and the first transmission clutch S1, and a fifth output which is connected directly to the transmission output 9.

Fig. 6 gives a diagrammatic representation of a third embodiment of the transmission unit according to the invention comprising five gearing lines, in which the fifth gearing line is connected to the first transmission input via the fourth gearing line. The fourth input is then connected directly to the first transmission input 5. The first, second and fourth inputs are connected to one another and the transmission unit again has an auxiliary clutch S* which can connect these outputs to the transmission output 9. The fifth gearing line again includes a fifth gear set O5 and a fifth transmission clutch S5 connected in series to the fifth gear set, and has a fifth input which is connected to the fourth gearing line 04 in between the fourth gear set I4 and the fourth transmission clutch S4, and a fifth output which is connected directly to the transmission output 9.

The first gear is then realized by opening the short-circuit clutch, the auxiliary clutch and the first, third and fourth transmission clutches and closing the main clutch and the second and fifth transmission clutches.

The first transmission input is constituted by a shaft and the second transmission input is constituted by a hollow shaft which is arranged concentrically around the shaft. The main clutch is constituted by a dry plate or a wet plate clutch.

One or more of the transmission clutches, the auxiliary clutch and the short-circuit clutch can be constituted by claw clutches and/or synchronizers. The main clutch can also be constituted by a claw clutch and/or synchronizer.

One or more of the transmission clutches, the auxiliary clutch and the short-circuit clutch can be constituted by freewheel bearings/freewheel bearing clutches. More particularly the second transmission clutch can be constituted by a freewheel bearing/freewheel bearing clutch.

The transmission unit may comprise an electromotor/generator which is coupled to one of the rotating elements of the transmission unit and/or a flywheel that is coupled to one of the rotating elements of the transmission unit.

In that case the electromotor/generator is used for synchronizing one or more clutches and/or for driving purely electrically, where the combustion engine can be disengaged from the drive line.

In that case the electromotor assists in the shifting from one gear to the next so that the electromotor reduces the energy dissipation in the main clutch.

The flywheel can be used for starting the drivie source and/or driving the vehicle.

Two different transmission clutches can be operated by means of a single switching mechanism (fork) and one or more switching forks can be operated by a switching drum which can move the switching fork(s) in axial direction by rotating around its own axis.

One or more switching forks and/or the switching drum may be made to a large extent or completely of a (reinforced) plastic material.

The gear set(s) within the gearing lines consist of mechanical gear sets among which are shafts, gear reduction units, planetary gear sets, continuously variable transmissions, chain transmissions, etc.

The lowest transmission gear set of the transmission unit (1^{st} gear) can be obtained via the main clutch (1^{st} input) with S2 and S4 closed and S, S*, S1 and S3 open, or the lowest transmission gear set of the transmission unit (1^{st} gear) can be obtained via the 2^{nd} input with S2 and S4 closed and S*, S1 and S3 open. The main clutch and S2 may be opened or closed separately.

The main clutch may be operated electromechanically (by means of a lever and a pressure bearing) or the main clutch may be operated electrohydraulically by means of a closed hydraulic system (by means of a concentric slave cylinder CSC), or the main clutch may be operated electrohydraulically by means of an open hydraulic system (by means of a concentric slave cylinder CSC or a lever and a pressure bearing).

The switch forks may be operated electromechanically (by means of a switching drum or switching mechanism).

The transmission unit is arranged to have one or several side shafts. A reverse gear R is present in the transmission unit and is either or not synchronized.

The above driving concepts may:
- be used for rear wheel drive, in which case the output shaft is connected to the rear differential by means of a differential gearbox;
- be used for front wheel drive, in which case either the front wheel configuration (engine installed transversely) or the rear wheel configuration (engine installed lengthwise) is taken as a basis;
- be arranged with any arbitrary clutch;
- be combined;
- be provided with alls sorts of embodiments of a reverse gear;
- be provided with all sorts of embodiments of a parking mechanism.

Albeit the invention has been described in the foregoing with reference to the drawings, it should be observed that the invention is not by any manner or means restricted to the embodiment shown in the drawings.

## Claims

1. A transmission unit having a main input (1) which can be connected to a drive source (E), and a main output (3) which can be connected to the driven wheels (L), comprises:
- a transmission (T) having a first and a second transmission input (5,7) and a transmission output (9), as well as
- a main clutch (C) comprising a first clutch section (c1) which is connected to the main input and to the second transmission input, and a second clutch section (c2) which is connected to the first transmission input,
which transmission:
- comprises a first gearing line (O1) which comprises a first gear set (I1) and a first transmission clutch (S1) connected in series to the first gear set, and which has a first input (in1) which is connected to the first transmission input (5), and a first output (out1) which is connected to the transmission output (9), as well as
- a second gearing line (O2) which runs parallel to the first gearing line and comprises a second gear set (12) and a second transmission clutch (S2) connected in series to the second gear set, and which has a second input (in2) which is connected to the first transmission input (5), and a second output (out2) which is connected to the transmission output (9),
- a third gearing line (O3) which comprises a third gear set (13) and a third transmission clutch (S3) connected in series to the third gear set, and which has a third input (in3) which is connected to the second transmission input (7), and a third output (out3) which is connected to the transmission output (9), where the second transmission input (7) can be connected via a short-circuit clutch (S) to the second gearing line (O2) in between the second transmission clutch (S2) and the second gear set (12),
**characterized in that** the transmission (T) comprises a fourth gearing line (O4) which comprises a fourth gear set (14) and a fourth transmission clutch (S4) connected in series to the fourth gear set, and which has a fourth input (in4) which is connected to the first transmission input (5), and a fourth output (out4) which is connected to the transmission output (9).

2. A transmission unit as claimed in claim 1, **characterized in that** the first and second transmission clutches (S1,S2) are constituted by a first switch clutch that can be switched between three positions, being a first position in which the first transmission input (5) is connected to the first gear set(I1), a second position in which the first transmission input is connected to the second gear set (12), and a third position in which the first transmission input is connected to neither gear set.

3. A transmission unit as claimed in claim 1 or 2, **characterized in that** the third transmission clutch (S3) and the short-circuit clutch (S) are constituted by a second switch clutch that can be switched between three positions, being a first position in which the second transmission input (7) is connected to the third gear set (13), a second position in which the second transmission input is connected to the second gear set (12), and a third position in which the second transmission input is connected to neither gear set.

4. A transmission unit as claimed in any of the preceding claims, **characterized in that** the fourth input (in4) between the first gear set (I1) and the first transmission clutch (S1) is connected to the first gearing line (O1).

5. A transmission unit as claimed in claim 4, **characterized in that** the first, second and third output (out1,out2,out3) are connected to one another, and **in that** the transmission (T) comprises an auxiliary clutch (S*) which can connect these outputs to the transmission output (9).

6. A transmission unit as claimed in claim 5, **characterized in that** the fourth transmission clutch (S4) and the auxiliary clutch (S*) are constituted by a third switch clutch which can be switched between three positions, being a first position in which the fourth output (out4) is connected to the transmission output (9), a second position in which the first, second and third outputs (out1,out2,out3) are connected to the transmission output (9) and a third position in which the transmission output is connected to none of the outputs.

7. A transmission unit as claimed in claim 4, **characterized in that** the first and the second output (outl,out2) are connected to each other and the transmission (T) includes an auxiliary clutch (S*) which can connect these outputs to the transmission output (9).

8. A transmission unit as claimed in claim 7, **characterized in that** the third output (out3) is connected directly to the transmission output (9).

9. A transmission unit as claimed in claim 7 or 8, **characterized in that** the fourth transmission clutch (S4) and the auxiliary clutch (S*) are constituted by a third switch clutch which can be switched between three positions, being a first position in which the fourth output (out4) is connected to the transmission output (9), a second position in which the first and second outputs (outl,out2) are connected to the transmission output (9) and a third position in which the transmission output is connected to none of the outputs.

10. A transmission unit as claimed in claim 7, 8 or 9, **characterized in that** the transmission comprises a fifth gearing line (O5) which comprises a fifth gear set (15) and a fifth transmission clutch (S5) connected in series to the fifth gear set, and which has a fifth input (in5) which is connected to the second transmission input (7), and a fifth output which is connected directly to the transmission output (9).

11. A transmission unit as claimed in claim 7, 8 or 9, **characterized in that** the transmission comprises a fifth gearing line (O5) which comprises a fifth gear set (15) and a fifth transmission clutch (S5) connected in series to the fifth gear set, and which has a fifth input (in5) which is connected to the first transmission input (5), and a fifth output which is connected directly to the transmission output (9).

12. A transmission unit as claimed in claim 7, 8 or 9, **characterized in that** the transmission comprises a fifth gearing line (O5) which comprises a fifth gear set (15) and a fifth transmission clutch (S5) connected in series to the fifth gear set, and which has a fifth input (in5) which is connected to the first gearing line (O1) in between the first gear set (I1) and the first transmission clutch (Sl), and a fifth output (out5) which is connected directly to the transmission output (9).

13. A transmission unit as claimed in claim 1, **characterized in that** the fourth input (in4) is connected directly to the first transmission input (5).

14. A transmission unit as claimed in claim 13, **characterized in that** the first, second and fourth output (outl,out2,out4) are connected to one another and **in that** the transmission (T) comprises an auxiliary clutch (S*) which can connect these outputs to the transmission output (9), and the transmission (T) comprises a fifth gearing line (O5) which comprises a fifth gear set (15) and a fifth transmission clutch (S5) connected in series to the fifth gear set, and which has a fifth input (in5) which is connected to the fourth gearing line (O4) in between the fourth gear set (14) and the fourth transmission clutch (S4), and a fifth output (out5) which is connected directly to the transmission output (9).

## Patentansprüche

1. Getriebeeinheit mit einem Haupteingang (1), der mit einer Antriebsquelle (E) verbunden werden kann, und einem Hauptausgang (3), der mit den angetriebenen Rädern (L) verbunden werden kann, umfasst:
- ein Getriebe (T) mit einem ersten und einem zweiten Getriebeeingang (5,7) und einem Getriebeausgang (9) sowie
- eine Hauptkupplung (C) mit einem ersten Kupplungsabschnitt (cl), der mit dem Haupteingang und dem zweiten Getriebeeingang verbunden ist, und einem zweiten Kupplungsabschnitt (c2), der mit dem ersten Getriebeeingang verbunden ist, wobei das Getriebe:
- eine erste Getriebelinie (O1) umfasst, die einen ersten Zahnradsatz (I1) und eine erste Getriebekupplung (S1) umfasst, die mit dem ersten Zahnradsatz in Reihe geschaltet ist, und die einen ersten Eingang (in1) hat, der mit dem ersten Getriebeeingang (5) verbunden ist, und einen ersten Ausgang (out1) hat, der mit dem Getriebeausgang (9) verbunden ist, sowie
- eine zweite Getriebelinie (O2), die parallel zu der ersten Getriebelinie verläuft und einen zweiten Zahnradsatz (I2) und eine zweite Getriebekupplung (S2) umfasst, die mit dem zweiten Zahnradsatz in Reihe geschaltet ist, und die einen zweiten Eingang (in2) hat, der mit dem ersten Getriebeeingang (5) verbunden ist, und einem zweiten Ausgang (out2) hat, der mit dem Getriebeausgang (9) verbunden ist,
- eine dritte Zahnradlinie (O3), die einen dritten Zahnradsatz (I3) und eine dritte Getriebekupplung (S3) umfasst, die mit dem dritten Zahnradsatz in Reihe geschaltet ist, und die einen dritten Eingang (in3) hat, der mit dem zweiten Getriebeeingang (7) verbunden ist, und einen dritten Ausgang (out3) hat, der mit dem Getriebeausgang (9) verbunden ist, wobei der zweite Getriebeeingang (7) über eine Kurzschlusskupplung (S) mit der zweiten Getriebelinie (O2) zwischen der zweiten Getriebekupplung (S2) und dem zweiten Zahnradsatz (I2) verbunden werden kann,
**dadurch gekennzeichnet, dass** das Getriebe (T) eine vierte Getriebelinie (O4) umfasst, die einen vierten Zahnradsatz (I4) und eine vierte Getriebekupplung (S4) umfasst, die mit dem vierten Zahnradsatz in Reihe geschaltet ist, und die einen vierten Eingang (in4) hat, der mit dem ersten Getriebeeingang (5) verbunden ist, und einem vierten Ausgang (out4) hat, der mit dem Getriebeausgang (9) verbunden ist.

2. Getriebeeinheit nach Anspruch 1, **dadurch gekennzeichnet, dass** die erste und die zweite Getriebekupplung (S1, S2) durch eine erste Schaltkupplung gebildet werden, die zwischen drei Positionen geschaltet werden kann, wobei es sich um eine erste Position handelt, in der der erste Getriebeeingang (5) mit dem ersten Zahnradsatz (I1) verbunden ist, eine zweite Position, in der der erste Getriebeeingang mit dem zweiten Zahnradsatz (I2) verbunden ist, und eine dritte Position, in der der erste Getriebeeingang mit keinem der Zahnradsätze verbunden ist.

3. Getriebeeinheit nach Anspruch 1 oder 2, **dadurch gekennzeichnet, dass** die dritte Getriebekupplung (S3) und die Kurzschlusskupplung (S) aus einer zweiten Schaltkupplung bestehen, die zwischen drei Positionen geschaltet werden kann, wobei es sich um eine erste Position handelt, in der der zweite Getriebeeingang (7) mit dem dritten Zahnradsatz (I3) verbunden ist, eine zweite Position, in der der zweite Getriebeeingang mit dem zweiten Zahnradsatz (I2) verbunden ist, und eine dritte Position, in der der zweite Getriebeeingang ist mit keinem Zahnradsatz verbunden.

4. Getriebeeinheit nach einem der vorhergehenden Ansprüche, **dadurch gekennzeichnet, dass** der vierte Eingang (in4) zwischen dem ersten Zahnradsatz (I1) und der ersten Getriebekupplung (S1) mit der ersten Getriebelinie (O1) verbunden ist.

5. Getriebeeinheit nach Anspruch 4, **dadurch gekennzeichnet, dass** der erste, zweite und dritte Ausgang (out1, out2, out3) miteinander verbunden sind, und dass das Getriebe (T) eine Hilfskupplung (S*) umfasst, die diese Ausgänge mit dem Getriebeausgang (9) verbinden kann.

6. Getriebeeinheit nach Anspruch 5, **dadurch gekennzeichnet, dass** die vierte Getriebekupplung (S4) und die Hilfskupplung (S*) aus einer dritten Schaltkupplung bestehen, die zwischen drei Positionen geschaltet werden kann, wobei es sich um eine erste Position handelt, in der der vierte Ausgang (out4) mit dem Getriebeausgang (9) verbunden ist, eine zweite Position, in der der erste, der zweite und der dritte Ausgang (out1, out2, out3) mit dem Getriebeausgang (9) verbunden sind, und eine dritte Position, in der der Getriebeausgang mit keinem der Ausgänge verbunden ist.

7. Getriebeeinheit nach Anspruch 4, **dadurch gekennzeichnet, dass** der erste und der zweite Ausgang (out1, out2) miteinander verbunden sind und das Getriebe (T) eine Hilfskupplung (S*) umfasst, die diese Ausgänge mit dem Getriebeausgang (9) verbinden kann.

8. Getriebeeinheit nach Anspruch 7, **dadurch gekennzeichnet, dass** der dritte Ausgang (out3) direkt mit dem Getriebeausgang (9) verbunden ist.

9. Getriebeeinheit nach Anspruch 7 oder 8, **dadurch gekennzeichnet, dass** die vierte Getriebekupplung (S4) und die Hilfskupplung (S*) aus einer dritten Schaltkupplung bestehen, die zwischen drei Positionen geschaltet werden kann, wobei es sich um eine erste Position handelt, in der der vierte Ausgang (out4) mit dem Getriebeausgang (9) verbunden ist, eine zweite Position, in der der erste und der zweite Ausgang (out1, out2) mit dem Getriebeausgang (9) verbunden sind, und eine dritte Position, in der der Getriebeausgang mit keinem der Ausgänge verbunden ist.

10. Getriebeeinheit nach Anspruch 7, 8 oder 9, **dadurch gekennzeichnet, dass** das Getriebe eine fünfte Getriebelinie (05) umfasst, die einen fünften Zahnradsatz (I5) und eine fünfte Getriebekupplung (S5) umfasst, die mit dem fünften Zahnarztsatz in Reihe geschaltet ist, und die einen fünften Eingang (in5) hat, der mit dem zweiten Getriebeeingang (7) verbunden ist, und einen fünften Ausgang, der direkt mit dem Getriebeausgang (9) verbunden ist.

11. Getriebeeinheit nach Anspruch 7, 8 oder 9, **dadurch gekennzeichnet, dass** das Getriebe eine fünfte Getriebelinie (O5) umfasst, die einen fünften Zahnradsatz (I5) und eine fünfte Getriebekupplung (S5) umfasst, die mit dem fünften Zahnarztsatz in Reihe geschaltet ist, und die einen fünften Eingang (in5) hat, der mit dem ersten Getriebeeingang (5) verbunden ist, und einen fünften Ausgang, der direkt mit dem Getriebeausgang (9) verbunden ist.

12. Getriebeeinheit nach Anspruch 7, 8 oder 9, **dadurch gekennzeichnet, dass** das Getriebe eine fünfte Getriebelinie (O5) umfasst, die einen fünften Zahnradsatz (I5) und eine fünfte Getriebekupplung (S5) umfasst, die mit dem fünften Zahnarztsatz in Reihe geschaltet ist, und die einen fünften Eingang (in5) hat, der mit der ersten Getriebelinie (O1) zwischen dem ersten Zahnradsatz (I1) und der ersten Getriebekupplung (S1) verbunden ist, und einen fünften Ausgang (out5) hat, der direkt mit dem Getriebeausgang (9) verbunden ist.

13. Getriebeeinheit nach Anspruch 1, **dadurch gekennzeichnet, dass** der vierte Eingang (in4) direkt mit dem ersten Getriebeeingang (5) verbunden ist.

14. Getriebeeinheit nach Anspruch 13, **dadurch gekennzeichnet, dass** der erste, zweite und vierte Ausgang (out1, out2, out4) miteinander verbunden sind, und dass das Getriebe (T) eine Hilfskupplung (S*) umfasst, die diese Ausgänge mit dem Getriebeausgang (9) verbinden kann, und das Getriebe (T) eine fünfte Getriebelinie (05) umfasst, die einen fünften Zahnradsatz (I5) und eine fünfte Getriebekupplung (S5) umfasst, die mit dem fünften Zahnradsatz in Reihe geschaltet ist, und die einen fünften Eingang (in5) hat, der mit der vierten Getriebelinie (O4) zwischen dem vierten Zahnradsatz (I4) und der vierten Getriebekupplung (S4) verbunden ist, und einen fünften Ausgang (out5) hat, der direkt mit dem Getriebeausgang (9) verbunden ist.

## Revendications

1. Unité de transmission ayant une entrée principale (1) qui peut être reliée à une source d'entraînement (E), et une sortie principale (3) qui peut être reliée aux roues entraînées si (L), qui comprend :
- une transmission (T) ayant une première et une seconde entrées de transmission (5, 7) et une sortie de transmission (9), et
- un embrayage principal (C) comprenant une première section d'embrayage (c1) qui est reliée à l'entrée principale et à la seconde entrée de transmission, et une seconde section d'embrayage (c2) qui est reliée à la première entrée de transmission, ladite transmission :
- comprenant une première ligne d'engrenage (O1) qui comprend un premier groupe d'engrenages (I1) et un premier embrayage de transmission (S1) relié en série au premier groupe d'engrenages, et qui possède une première entrée (in1) qui est reliée à la première entrée de transmission (5), et une première sortie (out1) qui est reliée à la sortie de transmission (9), et
- une seconde ligne d'engrenage (02) parallèle à la première ligne d'engrenage et qui comprend un second groupe d'engrenages (I2) et un second embrayage de transmission (S2) relié en série au second groupe d'engrenages, et qui possède une seconde entrée (in2) qui est reliée à la première entrée de transmission (5), et une seconde sortie (out2) qui est reliée à la sortie de transmission (9),
- une troisième ligne d'engrenage (03) qui comprend un troisième groupe d'engrenages (I3) et un troisième embrayage de transmission (S3) relié en série au troisième groupe d'engrenages, et qui possède une troisième entrée (in3) qui est reliée à la seconde entrée de transmission (7), et une troisième sortie (out3) qui est reliée à la sortie de transmission (9), dans lequel la seconde entrée de transmission (7) peut être reliée via un embrayage de court-circuit (S) à la seconde ligne d'engrenage (02) entre le second embrayage de transmission (S2) et le second groupe d'engrenages (I2),
**caractérisée en ce que** la transmission (T) comprend une quatrième ligne d'engrenage (04) qui comprend un quatrième groupe d'engrenages (I4) et un quatrième embrayage de transmission (S4) relié en série au quatrième groupe d'engrenages, et qui possède une quatrième entrée (in4) qui est reliée à la première entrée de transmission (5), et une quatrième sortie (out4) qui est reliée à la sortie de transmission (9).

2. Unité de transmission selon la revendication 1, **caractérisée en ce que** le premier et le second embrayages de transmission (S1, S2) sont constitués par un premier embrayage à commutateur qui peut basculer entre trois positions, qui sont une première position dans laquelle la première entrée de transmission (5) est reliée au premier groupe d'engrenages (I1), une seconde position dans laquelle la première entrée de transmission est reliée au second groupe d'engrenages (I2), et une troisième position dans laquelle la première entrée de transmission est reliée à ni l'un ni l'autre parmi les groupes d'engrenages.

3. Unité de transmission selon la revendication 1 ou 2, **caractérisée en ce que** le troisième embrayage de transmission (S3) et l'embrayage à court-circuit (S) sont constitués par un second embrayage à commutateur qui peut basculer entre trois positions, qui sont une première position dans laquelle la seconde entrée de transmission (7) est reliée au troisième groupe d'engrenages (I3), une seconde position dans laquelle la seconde entrée de transmission est reliée au second groupe d'engrenages (I2), et une troisième position dans laquelle la seconde entrée de transmission est reliée à ni l'un ni l'autre parmi les groupes d'engrenages.

4. Unité de transmission selon l'une quelconque des revendications précédentes, **caractérisée en ce que** la quatrième entrée (in4) entre le premier groupe d'engrenages (I1) et le premier embrayage de transmission (S1) est reliée à la première ligne d'engrenage (O1).

5. Unité de transmission selon la revendication 4, **caractérisée en ce que** la première, la seconde et la troisième sorties (out1, ou2, out3) sont reliées les unes aux autres, et **en ce que** la transmission (T) comprend un embrayage auxiliaire (S*) qui peut relier ces sorties à la sortie de transmission (9).

6. Unité de transmission selon la revendication 5, **caractérisée en ce que** le quatrième embrayage de transmission (S4) et l'embrayage auxiliaire (S*) sont constitués par un troisième embrayage à commutateur qui peut basculer entre trois positions, qui sont une première position dans laquelle la quatrième sortie (out4) est reliée à la sortie de transmission (9), une seconde position dans laquelle la première, la seconde et la troisième sorties (out1, out2, out3) sont reliées à la sortie de transmission (9), et une troisième position dans laquelle la sortie de transmission est reliée à aucune des sorties.

7. Unité de transmission selon la revendication 4, **caractérisée en ce que** la première et la seconde sorties (out1, out2) sont reliées l'une à l'autre, et la transmission (T) comprend un embrayage auxiliaire (S*) qui peut relier ces sorties à la sortie de transmission (9).

8. Unité de transmission selon la revendication 7, **caractérisée en ce que** la troisième sortie (out3) est reliée directement à la sortie de transmission (9).

9. Unité de transmission selon la revendication 7 ou 8, **caractérisée en ce que** le quatrième embrayage de transmission (S4) et l'embrayage auxiliaire (S*) sont constitués par un troisième embrayage à commutateur qui peut basculer entre trois positions, qui sont une première position dans laquelle la quatrième sortie (out4) est reliée à la sortie de transmission (9), une seconde position dans laquelle la première et la seconde sorties (out1, out2) sont reliées à la sortie de transmission (9), et une troisième position dans laquelle la sortie de transmission est reliée à aucune des sorties.

10. Unité de transmission selon la revendication 7, 8 ou 9, **caractérisée en ce que** la transmission comprend une cinquième ligne d'engrenage (05) qui comprend un cinquième groupe d'engrenages (I5) et un cinquième embrayage de transmission (S5) relié en série au cinquième groupe d'engrenages, et qui possède une cinquième entrée (in5) qui est reliée à la seconde entrée de transmission (7), et une cinquième sortie qui est reliée directement à la sortie de transmission (9).

11. Unité de transmission selon la revendication 7, 8 ou 9, **caractérisée en ce que** la transmission comprend une cinquième ligne d'engrenage (05) qui comprend un cinquième groupe d'engrenages (I5) et un cinquième embrayage de transmission (S5) relié en série au cinquième groupe d'engrenages, et qui possède une cinquième entrée (in5) qui est reliée à la première entrée de transmission (5), et une cinquième sortie qui est reliée directement à la sortie de transmission (9).

12. Unité de transmission selon la revendication 7, 8, ou 9, **caractérisée en ce que** la transmission comprend une cinquième ligne d'engrenage (05) qui comprend un cinquième groupe d'engrenages (I5) et un cinquième embrayage de transmission (S5) relié en série au cinquième groupe d'engrenages, et qui possède une cinquième entrée (in5) qui est reliée à la première ligne d'engrenage (O1) entre le premier groupe d'engrenages (I1) et le premier embrayage de transmission (S1), et une cinquième sortie (out5) qui est reliée directement à la sortie de transmission (9).

13. Unité de transmission selon la revendication 1, **caractérisée en ce que** la quatrième entrée (in4) est reliée directement à la première entrée de transmission (5).

14. Unité de transmission selon la revendication 13, **caractérisée en ce que** la première, la seconde et la quatrième sorties (out1, out2, out4) sont reliées les unes aux autres, et **en ce que** la transmission (T) comprend un embrayage auxiliaire (S*) qui peut relier ces sorties à la sortie de transmission (9), et la transmission (T) comprend une cinquième ligne d'engrenage (05) qui comprend un cinquième groupe d'engrenages (I5) et un cinquième embrayage de transmission (S5) relié en série au cinquième groupe d'engrenages, et qui possède une cinquième entrée (in5) qui est reliée à la quatrième ligne d'engrenage (04) entre le quatrième groupe d'engrenages (I4) et le quatrième embrayage de transmission (S4), et une cinquième sortie (out5) qui est reliée directement à la sortie de transmission (9).
